# EUROPEAN PATENT APPLICATION

(11) **EP 4 645 471 A1**
(43) Date of publication of application: **05.11.2025**
(21) Application number: 24901774.0
(22) Date of filing: 29.03.2024
(51) Int. Cl.: H01M 4/525, H01M 4/36, H01M 10/0525

(54) **POSITIVE ELECTRODE MATERIAL, PREPARATION METHOD THEREFOR, AND LITHIUM-ION BATTERY**

(30) Priority: 04.03.2024 CN 202410244850
(71) Applicant: Beijing Easpring Material Technology Co., Ltd., Beijing 100160 (CN)
(72) Inventor: JIN, Yuqiang, Beijing 100160 (CN); TONG, Junfan, Beijing 100160 (CN); WANG, Rui, Beijing 100160 (CN); ZHANG, Yuequan, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/084991
(87) International publication number: WO 2025/184953

(57) **Abstract**

The present disclosure relates to the field of lithium-ion batteries and discloses a cathode material, a preparation method therefor, and a lithium-ion battery. The cathode material has a composition represented by Li₁₊ₐ(NiₓCo_{y}Mn_{z}G_{b})T_{c}O₂, where 0.02≤a≤0.1,0.6≤x≤1, 0<y≤0.5, 0<z≤0.5, 0<b≤0.02, 0<c<0.02. A characteristic peak (003) before and after 80 cycles at 45°C satisfies 0°≤△P=Pₚᵣₑ-Pₚₒₛₜ≤0.2°. This cathode material has a high particle strength and more excellent crystal structure stability, which makes cycling performance of the cathode material significantly improved.

## Description

### CROSS-REFERENCE TO RELATED APPLICATIONS

This application claims priority to Chinese Patent Applications No. 202410244850.X, filed on March 4, 2024, the entire contents of which are incorporated herein by reference.

### FIELD

The present disclosure relates to the technical field of lithium-ion batteries, and in particular, to a cathode material, a preparation method therefor, and a lithium-ion battery.

### BACKGROUND

In recent years, with the development of global new energy vehicle industries, lithium-ion batteries have gained wide popularity due to their high energy density and excellent cycling performance. Ternary materials are widely used because of their advantages such as high energy density and excellent low-temperature performance. In pursuit of a higher energy density, high-nickel and high-voltage have become two mainstream development directions currently. However, whether it is high-nickel or high-voltage, a main problem currently faced is that the material has poor structure stability after the implementation of high-nickel or high-voltage, resulting in poor cycling stability of the ternary material and an increase in gas generation.

To improve the structure stability, the main strategies currently employed include adjusting an internal structure of the material, bulk phase doping, and surface coating. For example, CN108598379A discloses a composite material containing nickel-cobalt-aluminate lithium coated with lithium tungstate and a preparation method and application therefor. A nickel-cobalt-aluminate precursor is dispersed in a lithium-containing solution. Then, tungsten trioxide is added. The lithium-containing solution reacts with the tungsten trioxide to form Li₂WO₄. During evaporative crystallization, Li₂WO₄ is directly deposited on the nickel-cobalt-aluminate precursor to form a coating. Then, lithium mixing and sintering are performed to obtain LiNi_{0.8}Co_{0.15}Al_{0.05}O₂@Li₂WO₄. Through this in-situ reaction, the formed deposition coating may form a very uniform coating layer. The cathode material prepared by this method has good doping and coating effects. However, the process is complex, and the filtrate recovery process is complex and costly.

### SUMMARY

An objective of the present disclosure is to overcome problems of a low particle strength and poor crystal structure stability of a cathode material in the prior art, and to provide a cathode material, a preparation method therefore, and a lithium-ion battery. After 80 cycles at 45°C, the cathode material exhibits a small shift in the peak position of a characteristic peak (003), indicating that the cathode material has a high particle strength and more excellent crystal structure stability, thereby significantly improving cycling performance of the cathode material.

In pursuit of the above objective, a first aspect of the present disclosure provides a cathode material. The cathode material has a composition represented by Formula I: Li₁₊ₐ(NiₓCo_{y}Mn_{z}G_{b})T_{c}O₂ Formula I, where 0.02≤a≤0.1,0.6≤x≤1, 0<y≤0.5,0<z≤0.5, 0<b<0.02, 0<c≤0.02; G is selected from at least one of Al, Y, Zr, Ti, Ca, V, Nb, Ta, Co, W, Er, La, Sb, Mg, Sr, Sn, Mn, Mo, Ce, F, B, and P, and T is selected from at least one of Al, Sr, Si, Nb, Co, W, Ti, Zr, Ce, Mn, F, B, and P; and a characteristic peak (003), measured by XRD, before and after 80 cycles at 45°C satisfies: 0°≤ΔP=Pₚᵣₑ-Pₚₒₛₜ≤0.2°, where Pₚᵣₑ is a peak position of the characteristic peak (003) before the cycling, and Pₚₒₛₜ is a peak position of the characteristic peak (003) after 80 cycles.

A second aspect of the present disclosure provides a preparation method of the above cathode material. The preparation method includes: (1) physically mixing a precursor, a lithium source, and an additive optionally containing element C1, to obtain a uniform mixture I; (2) performing a first sintering treatment on the mixture I in an oxygen-containing atmosphere at a constant temperature T₁ for a constant temperature duration t₁, and crushing and sieving the sintered mixture I or directly sieving the sintered mixture I, to obtaining a first sintered material II; (3) mixing the first sintered material II and an additive optionally containing element C2, to obtain a uniform mixture III; (4) performing a second sintering treatment on the mixture III in an oxygen-containing atmosphere at a constant temperature T₂ for a constant temperature duration t₂, and crushing and sieving the sintered mixture III or directly sieving the sintered mixture III, to obtain a second sintered material IV; (5) mixing the second sintered material IV and an additive containing element T, to obtaining a uniform mixture V; and (6) performing a third sintering treatment on the mixture V in an oxygen-containing atmosphere at a constant temperature T₃ for a constant temperature duration t₃, and crushing and sieving the sintered mixture V or directly sieving the sintered mixture V, to obtaining the cathode material. The precursor is selected from nickel cobalt manganese oxide and/or nickel cobalt manganese hydroxide; amounts of the lithium source and the precursor enable n(Li):[n(Ni)+n(Co)+n(Mn)+n(G)]=1.02 to 1.10:1 to be satisfied; and at least one of the additive containing element C1 and the additive containing element C2 is added.

A third aspect of the present disclosure provides a lithium-ion battery. The lithium-ion battery includes the above cathode material.

Through the above technical solutions, the cathode material, the preparation method for therefor, and the lithium-ion battery that are provided by the present disclosure have the following beneficial effects.

The cathode material of the present disclosure exhibits a small shift in the peak position of the characteristic peak (003) after 80 cycles at 45°C, indicating that the cathode material has the high particle strength and more excellent crystal structure stability, which is beneficial for Li-ion transmission and cycling performance. When used in the lithium-ion battery, the cathode material ensures a high capacity retention rate while having a high discharge capacity.

Further, the cathode material of the present disclosure has a low lattice volume variation rate at different SOCs, enabling further improving the particle strength and crystal structure stability of the cathode material, thus further improving the discharge capacity and capacity retention rate of the lithium-ion battery containing the cathode material.

In the preparation method provided by the present disclosure, by adjusting a specific lithium addition amount and using a process of three-stage sintering simultaneously, while ensuring uniform reaction of the precursor and the lithium source, it is ensured that the element G (element C1 and/or element C2) and the element T in additive play their respective roles at specific temperatures. The preparation method provided by the present disclosure can reduce a surface residual alkali content while improving effectiveness of the elements, and thus improve the particle strength and structure stability of the prepared cathode material.

Further, temperatures of the three-stage sintering are controlled to satisfy specific conditions, which can make different elements enter different positions of the material. The different elements enter a core part of the material at a high temperature, enter a subsurface layer of the material at a sub-high temperature, and adhere to a surface of the material at a low temperature, achieving a multi-dimensional improvement in the particle strength and structure stability of the material from the inside to the surface of the material.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 shows a diagram of the position of a characteristic peak 003, measured by XRD, before and after cycling of a cathode material in Example 1;
FIG. 2 shows a diagram of the position of a characteristic peak 003, measured by XRD, before and after cycling of a cathode material in Comparative Example 1;
FIG. 3 shows an EDS analysis diagram of a cross-section of a cathode material in Example 4; and
FIG. 4 shows a comparison of cycling performances of lithium-ion batteries respectively obtained by assembling the cathode materials in Example 1 and Comparative Example 1.

### DETAILED DESCRIPTION

Endpoints and any values of the disclosed ranges herein are not limited to the precise ranges or values. These ranges or values should be understood to include values close to these ranges or values. For numerical ranges, one or more new numerical ranges can be obtained by combining endpoint values of various ranges, or the endpoint values of various ranges and individual point values, or the individual point values with each other. These numerical ranges should be considered as being specifically disclosed herein.

A first aspect of the present disclosure provides a cathode material. The cathode material has a composition represented by Formula I: Li₁₊ₐ(NiₓCo_{y}Mn_{z}G_{b})T_{c}O₂ Formula I, where 0.02≤a≤0.1, 0.6≤x≤1, 0<y≤0.5, 0<z≤0.5, 0<b≤0.02, 0<c≤0.02. G is selected from at least one of Al, Y, Zr, Ti, Ca, V, Nb, Ta, Co, W, Er, La, Sb, Mg, Sr, Sn, Mn, Mo, Ce, F, B, and P, and T is selected from at least one of Al, Sr, Si, Nb, Co, W, Ti, Zr, Ce, Mn, F, B, and P. A characteristic peak (003), measured by XRD, before and after 80 cycles at 45°C satisfies: 0°≤ΔP=Pₚᵣₑ-Pₚₒₛₜ≤0.2°, where Pₚᵣₑ is a peak position of the characteristic peak (003) before the cycling, and Pₚₒₛₜ is a peak position of the characteristic peak (003) after 80 cycles.

In the present disclosure, the cathode material exhibits a small shift in peak position of the characteristic peak (003) after 80 cycles at 45°C, indicating that the cathode material has a high particle strength and more excellent crystal structure stability, which is beneficial for Li-ion transmission and cycling performance. In particular, the cathode material contains an appropriate Li content. It can be ensured that when used in the lithium-ion battery, the cathode material ensures a high capacity retention rate while having a high discharge capacity.

In the present disclosure, the shift of the peak position of the characteristic peak (003) of the cathode material after 80 cycles at 45°C is measured by the following method.

The above-mentioned cathode material is prepared into a lithium-ion battery according to the conventional method. Specifically, the lithium-ion battery includes a positive plate, a negative plate, a separator located between the positive plate and the negative plate, and an electrolyte solution.

The positive plate includes a positive current collector and a cathode material layer on the positive current collector. The cathode material layer includes the above-mentioned cathode material, a binder, and a conductive agent.

The binder of the cathode material layer is a conventional choice in the battery field. A type and content of the binder are not specifically limited, and may include, but is not limited to, a combination of one or more of polyvinylidene fluoride (PVDF), vinylidene fluoride copolymers, or modified (for example, by carboxylic acid, acrylic acid, and acrylonitrile) derivatives thereof, and the like.

The conductive agent of the cathode material layer is a conventional choice in the battery field. A type and content of the conductive agent are not specifically limited, and may include, but is not limited to, a combination of one or more of acetylene black, conductive carbon black, vapor-grown carbon fiber (VGCF), carbon nanotubes (CNTs), Ketjen black, and the like.

The positive current collector may typically be a layered structure, and may typically be a structure or part capable of collecting current. The positive current collector may be various materials suitable for being used as a positive current collector of an electrochemical energy storage apparatus in the art. For example, the positive current collector may include, but is not limited to, a metal foil, and more specifically, a nickel foil or an aluminum foil.

The negative plate includes a negative current collector and a negative active material layer on a surface of the negative current collector. The negative active material layer usually includes a negative active material. The negative active material is a conventional choice in the battery field. A type and content of the negative active material are not specifically limited, and may include, but are not limited to, a combination of one or more of graphite, soft carbon, hard carbon, carbon fiber, mesocarbon microbeads, silicon-based materials, tin-based materials, lithium titanate, or other metals that may form alloys with lithium.

The graphite may be selected from a combination of one or more of artificial graphite, natural graphite, and modified graphite. The silico-based material may be selected from a combination of one or more of elemental silicon, silicon oxides, silicon-carbon composites, and silicon alloys. The tin-based material may be selected from a combination of one or more of elemental tin, tin oxides, and tin alloys.

The negative current collector is usually a structure or part capable of collecting the current. The negative current collector may be various materials suitable for being used as a negative current collector of a lithium-secondary battery in the art. For example, the negative current collector may be, but is not limited to, a metal foil, and more specifically, the negative current collector may be, but is not limited to, a copper foil. In addition, the negative plate may also be a lithium sheet.

The separator is a conventional choice in the battery field. A type and content of the separator are not specifically limited, and may include, but are not limited to, a combination of one or more of polyethylene, polypropylene, polyvinylidene fluoride, aramid, polyethylene terephthalate, polytetrafluoroethylene, polyacrylonitrile, polyimide, polyamide, polyester, and natural fibers.

The electrolyte solution is a conventional choice in the battery field. A type and content of the electrolyte solution are not specifically limited, and may be various electrolytes suitable for the lithium-secondary battery in the art. For example, the electrolyte solution usually includes an electrolyte and a solvent. The electrolyte may usually include a lithium salt. More specifically, the lithium salt may be an inorganic lithium salt and/or an organic lithium salt, and specifically may include, but is not limited to, a combination of one or more of LiPF₆, LiBF₄, LiN(SO₂F)₂ (abbreviated as LiFSI), LiN(CF₃SO₂)₂ (abbreviated as LiTFSI), LiClO₄, LiAsF₆, LiB(C₂O₄)₂ (abbreviated as LiBOB), and LiBF₂C₂O₄ (abbreviated as LiDFOB).

Some of the fabricated batteries are subjected to full-charge and full-discharge cycling at 45°C with a current of 1C for 80 cycles. Finally, un-cycled and cycled electrode plates are disassembled, then cleaned, and tested for their full spectra by an XRD diffractometer. Since the crystal structures change before and after the cycling, an XRD peak position will shift accordingly. The peak positions of the characteristic peak (003) before and after the cycling are respectively named as Pₚᵣₑ and Pₚₒₛₜ, and the shift value of the peak position is denoted as ΔP=Pₚᵣₑ-Pₚₒₛₜ. The larger the ΔP, the worse the crystal structure stability of the cathode material during the cycling.

In the present disclosure, except for element Li, elements Ni, Co, Mn, and G are distributed both inside and on the surface of a cathode material particle, while element T is distributed on the surface of the cathode material particle.

In the present disclosure, the element T in the cathode material is a main element in the coating. The coating includes an oxide containing the element T, and may also include at least one of the elements Ni, Co, Mn, and G from a matrix.

In the Formula I of the present disclosure, a may be 0.02, 0.03, 0.04, 0.05, 0.06, 0.07, 0.08, 0.09, 0.1, or in a range defined by any two of the aforementioned values; x may be 0.6, 0.7, 0.8, 0.9, 1, or in a range defined by any two of the aforementioned values; y may be 0.01, 0.05, 0.1, 0.15, 0.20, 0.25, 0.30, 0.35, 0.40, 0.4, 0.50, or in a range defined by any two of the aforementioned values; z may be 0.01, 0.05, 0.1, 0.15, 0.20, 0.25, 0.30, 0.35, 0.40, 0.4, 0.50, or in a range defined by any two of the aforementioned values; b may be 0.001, 0.0015, 0.0020, 0.0025, 0.0030, 0.0035, 0.0040, 0.0045, 0.0050, 0.0055, 0.0060, 0.0065, 0.0070, 0.0075, 0.0080, 0.0085, 0.0090, 0.0095, 0.010, 0.015, 0.02, or in a range defined by any two of the aforementioned values; c may be 0.001, 0.0015, 0.0020, 0.0025, 0.0030, 0.0035, 0.0040, 0.0045, 0.005, 0.0055, 0.0060, 0.0065, 0.0070, 0.0075, 0.0080, 0.0085, 0.0090, 0.0095, 0.010, 0.015, 0.02, or in a range defined by any two of the aforementioned values.

Further, 0.03≤a≤0.07, 0.6≤x≤1, 0<y≤0.5, 0<z≤0.5, 0.005≤b≤0.015, 0.002<c<0.015.

Further, G is selected from at least one of Al, Ti, Co, Sr, Ce, F, Y, Zr, W, and La. T is selected from at least one of B, Al, Si, W, and F.

In the present disclosure, ΔP may be 0°, 0.01°, 0.02°, 0.03°, 0.04°, 0.05°, 0.06°, 0.07°, 0.08°, 0.09°, 0.10°, 0.11°, 0.12°, 0.13°, 0.14°, 0.15°, 0.16°, 0.17°, 0.18°, 0.19°, 0.2°, or in a range defined by any two of the aforementioned values.

Further, 0°≤ΔP≤0.1°.

In the Formula I of the present disclosure, y and z represent a content of Co and a content of Mn from the precursor (nickel cobalt manganese oxide and/or nickel cobalt manganese hydroxide) in the cathode material, respectively. When G contains Co and/or Mn, a sum of the content of Co or Mn as the element G and contents of other elements G is denoted as b.

Specifically, when G contains Co and/or Mn, the cathode material has a composition represented by Formula II: Li₁₊ₐ(NiₓCo'_{y}Mn'_{z}Co"_{d}Mn"ₑG_{f})T_{c}O₂ Formula I where 0.02≤a≤0.1, 0.6≤x≤1, 0<y≤0.5, 0<z≤0.5, 0<d+e+f=b≤0.02, 0<c≤0.02. G is selected from at least one of Al, Y, Zr, Ti, Ca, V, Nb, Ta, W, Er, La, Sb, Mg, Sr, Sn, Mo, Ce, F, B, and P, and T is selected from at least one of Al, Sr, Si, Nb, Co, W, Ti, Zr, Ce, Mn, F, B, and P. Co' and Mn' come from the precursor, and Co" and Mn" come from doping elements. For the cathode material, the content of Co (or Mn) from the precursor and the content of Co (or Mn) as the G element are calculated from a feed amount during preparation of the cathode material.

According to the present disclosure, lattice volumes V of the cathode material, measured by XRD, at 0% SOC, 50% SOC, and 100% SOC satisfy: 0%≤ΔV_{50%}=(V₅₀-V₀)/V₀≤10%, and/or 0%≤ΔV_{100%}=(V₁₀₀-V₀)/V₀≤15%, where V₀ is the lattice volume of the cathode material at 0% SOC, V₅₀ is the lattice volume of the cathode material at 50% SOC, and V₁₀₀ is the lattice volume of the cathode material at 100% SOC.

In the present disclosure, when the lattice volumes V of the cathode material at different SOCs satisfy the above-mentioned relationship, it indicates that the cathode material has a low lattice volume variation rate during charging, further indicating that the cathode material has the high particle strength and excellent crystal structure stability, and thus further improving the discharge capacity and capacity retention rate of the lithium-ion battery containing the cathode material.

In the present disclosure, the lattice volume V of the cathode material at SOC is measured by the following method. The cathode material is prepared into a battery according to the corresponding formulation, then the battery is charged to corresponding 0% SOC, 50% SOC, and 100% SOC, respectively, and finally, the corresponding battery is disassembled for test with the XRD diffractometer after the electrode plate is cleaned.

In the present disclosure, ΔV_{50%} may be 0%, 1%, 2%, 3%, 4%, 5%, 6%, 7%, 8%, 9%, 10%, or in a range defined by any two of the aforementioned values. ΔV_{100%} may be 0%, 1%, 2%, 3%, 4%, 5%, 6%, 7%, 8%, 9%, 10%, 11%, 12%, 13%, 14%, 15%, or in a range defined by any two of the aforementioned values.

Further, 0%≤ΔV_{50%}≤5%.

Further, 0%≤V_{100%}≤10%.

According to the present disclosure, a specific surface area SSA of the cathode material before and after compression under a pressure of 4.5 tons satisfies: 0%≤ΔSSA%=(SSA₄-SSA₀)/SSA₀≤80%, where SSA₀ is the specific surface area of the cathode material before the compression, and SSA₄ is the specific surface area of the cathode material after the compression.

A change rate of the specific surface area of the cathode material before and after compression can reflect an intrinsic particle strength of the cathode material. The larger the ΔSSA_{%}, the worse the particle strength of the cathode material. In the present disclosure, the change rate of the specific surface area of the cathode material before and after compression is relatively low, indicating that the cathode material has a high intrinsic particle strength.

In the present disclosure, the specific surface area of the cathode material before and after compression is measured by the following method. A pressure of 4.5 tons is applied by an MCP-PD51 tester to the cathode material. Then, the cathode material is ground by a mortar, and is passed through a 300-mesh sieve to obtain powder under this pressure for specific surface area testing. The specific surface areas of the cathode material before and after compression are SSA₀ and SSA₄, respectively. A specific-surface-area increase rate is △SSA%. A calculation formula for the specific-surface-area increase rate is △SSA%, calculated as △SSA%=(SSA₄-SSA₀)/SSA₀.

In the present disclosure, △SSA% may be 0%, 5%, 10%, 15%, 20%, 25%, 30%, 35%, 40%, 45%, 50%, 55%, 60%, 65%, 70%, 75%, 80%, or in a range defined by any two of the aforementioned values.

Further, 0≤△SSA%≤50%.

According to the present disclosure, a median particle size of the cathode material ranges from 2 µm to 20 µm. For example, the median particle size of the cathode material may be 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or in a range defined by any two of the aforementioned values, preferably range from 3µm to 18µm.

According to the present disclosure, a residual alkali content of the cathode material ranges from 0 ppm to 10000 ppm. For example, the residual alkali content of the cathode material may be 0 ppm, 10 ppm, 20 ppm, 30 ppm, 40 ppm, 50 ppm, 100 ppm, 200 ppm, 300 ppm, 400 ppm, 500 ppm, 600 ppm, 700 ppm, 800 ppm, 900 ppm, 1,000 ppm, 1,200 ppm, 1,400 ppm, 1,600 ppm, 1,800 ppm, 2,000 ppm, 2,500 ppm, 3,000 ppm, 3,500 ppm, 4,000 ppm, 4,500 ppm, 5,000 ppm, 5,500 ppm, 6,000 ppm, 6,500 ppm, 7,000 ppm, 7,500 ppm, 8,000 ppm, 8,500 ppm, 9,000 ppm, 9,500 ppm, 10,000 ppm, or in a range defined by any two of the aforementioned values, preferably range from 1,000 ppm to 8,000 ppm.

In the present disclosure, the residual lithium includes lithium carbonate and/or lithium hydroxide.

A second aspect of the present disclosure provides a preparation method of the above-mentioned cathode material. The preparation method includes: (1) physically mixing a precursor, a lithium source, and an additive optionally containing element C1, to obtain a uniform mixture I; (2) performing a first sintering treatment on the mixture I in an oxygen-containing atmosphere at a constant temperature T₁ for a constant temperature duration t₁, and crushing and sieving the sintered mixture I or directly sieving the sintered mixture I, to obtain a first sintered material II; (3) mixing the first sintered material II and an additive optionally containing element C2, to obtain a uniform mixture III; (4) performing a second sintering treatment on the mixture III in an oxygen-containing atmosphere at a constant temperature T₂ for a constant temperature duration t₂, and crushing and sieving the sintered mixture III or directly sieving the sintered mixture III, to obtain a second sintered material IV; (5) mixing the second sintered material IV and an additive containing element T, to obtain a uniform mixture V; and (6) performing a third sintering treatment on the mixture V in an oxygen-containing atmosphere at a constant temperature T₃ for a constant temperature duration t₃, and crushing and sieving the sintered mixture V or directly sieving the sintered mixture V, to obtain the cathode material. The precursor is selected from nickel cobalt manganese oxide and/or nickel cobalt manganese hydroxide. Amounts of the lithium source, the precursor, the additive containing element C1, and the additive containing element C2 enable, in the cathode material, n(Li):[n(Ni)+n(Co)+n(Mn)+n(G)]=1.02 to 1.10:1 to be satisfied. At least one of the additive containing element C1 and the additive containing element C2 is added.

In the preparation method of the present disclosure, by adjusting a specific lithium addition amount and using a process of three-stage sintering simultaneously, while ensuring uniform reaction of the precursor and the lithium source, it is ensured that the elements G (element C1 and/or element C2) and the element T in additive play their respective roles at specific temperatures. Moreover, it is ensured that the cathode material has a high Li transmission rate. The preparation method provided by the present disclosure can reduce a surface residual alkali content while improving effectiveness of the elements, improving the particle strength and structure stability of the prepared cathode material, thereby obtaining the cathode material with the specific composition and structure as described in the first aspect of the present disclosure.

In the present disclosure, the amounts of the lithium source, the precursor, the additive containing element C1, and the additive containing element C2 enable that n(Li):[n(Ni)+n(Co)+n(Mn)+n(G)] is 1.02:1, 1.03:1, 1.04:1, 1.05:1, 1.06:1, 1.07:1, 1.08:1, 1.09:1, 1.10:1, or in a range defined by any two of the aforementioned values.

Further, the amounts of the lithium source, the precursor, the additive containing element C1, and the additive containing element C2 enable n(Li):[n(Ni)+n(Co)+n(Mn)+n(G)]=1.03 to 1.07:1 to be satisfied.

According to the present disclosure, the amounts of the precursor, the additive containing element C1, and the additive containing element C2 enable, in the cathode material, 0<n(G):[n(Ni)+n(Co)+n(Mn)+n(G)]≤0.02 to be satisfied.

In the present disclosure, when a total amount of the additive containing element C1 and the additive containing element C2 is controlled to satisfy the above-mentioned range, it is beneficial for differential distribution of elements inside the material and in a subsurface of the material, improving the structure stability and particle strength of the material, thereby enabling the battery assembled from this cathode material to have good charge and discharge capacities and cycling performance.

In the present disclosure, there is no specific limitation on the respective amounts of the additive containing element C1 and the additive containing element C2, as long as the total amount of the additive containing element C1 and the additive containing element C2 satisfies the above-mentioned range.

In the present disclosure, the amounts of the precursor, the additive containing element C1, and the additive containing element C2 enable that, in the cathode material, n(G):[n(Ni)+n(Co)+n(Mn)+n(G)] is 0.001, 0.0015, 0.0020, 0.0025, 0.0030, 0.0035, 0.0040, 0.0045, 0.0050, 0.0055, 0.0060, 0.0065, 0.0070, 0.0075, 0.0080, 0.0085, 0.0090, 0.0095, 0.010, 0.015, 0.02, or in a range defined by any two of the aforementioned values.

Further, the amounts of the precursor, the additive containing element C1, and the additive containing element C2 enable, in the cathode material, 0.005≤n(G):[n(Ni)+n(Co)+n(Mn)+n(G)]≤0.015 to be satisfied.

According to the present disclosure, amounts of the second sintered material and the additive containing element T enable, in the cathode material, 0<n(T):[n(Ni)+n(Co)+n(Mn)+n(G)]≤0.02 to be satisfied.

In the present disclosure, when the amount of the additive containing element T is controlled to satisfy the above-mentioned range, a protective layer is formed on the surface of the material, which further improves the surface stability and particle strength of the material.

In the present disclosure, the amounts of the second sintered material and the additive containing element T in the cathode material enable that n(T):[n(Ni)+n(Co)+n(Mn)+n(G)] is 0.001, 0.0015, 0.0020, 0.0025, 0.0030, 0.0035, 0.0040, 0.0045, 0.0050, 0.0055, 0.0060, 0.0065, 0.0070, 0.0075, 0.0080, 0.0085, 0.0090, 0.0095, 0.010, 0.015, 0.02, or in a range defined by any two of the aforementioned values.

Further, the amounts of the second sintered material and the additive containing element T enable, in the cathode material, 0.002<n(T):[n(Ni)+n(Co)+n(Mn)+n(G)]<0.015 to be satisfied.

According to the present disclosure, C1 and C2 is each independently selected from the at least one of Al, Y, Zr, Ti, Ca, V, Nb, Ta, Co, W, Er, La, Sb, Mg, Sr, Sn, Mn, Mo, Ce, F, B, and P.

In a preferred embodiment of the present disclosure, C1 is selected from at least one of Al, Y, Zr, W, La, Sr, and Ce. The above-mentioned specific types of element C1 contribute to further improving the lattice stability of the cathode material.

In another preferred embodiment of the present disclosure, C2 is selected from at least one of Al, Ti, Co, Sr, Ce, and F. The above-mentioned specific types of element C2 can further reduce the residual alkali content on the surface of the cathode material, while improving the particle strength of the cathode material.

According to the present disclosure, T is selected from at least one of Al, Sr, Si, Nb, Co, W, Ti, Zr, Ce, Mn, F, B, and P, preferably from at least one of B, Al, Si, W, and F.

In the present disclosure, there is no specific limitation on the type of the lithium source, which may be lithium carbonate, hydrated lithium hydroxide, or anhydrous lithium hydroxide.

In the present disclosure, there is no specific limitation on the types of the additive containing the element C1, the additive containing the element C2, and the additive containing the element T, as long as the element C1, element C2, or element T can be provided. For example, the additive containing the element C1, the additive containing the element C2, and the additive containing the element T may be oxides, hydroxides, or carbonates.

According to the present disclosure, the constant temperature T₁, the constant temperature T₂, and the constant temperature T₃ satisfy: 200°C≤T₃<T₂<T₁≤1,000°C.

In the present disclosure, when temperatures of the three-stage sintering are controlled to satisfy the above-mentioned relationship, the structure stability of the cathode material can be further improved. Specifically, performing the first sintering treatment at a higher temperature under the condition of a high lithium stoichiometric ratio can make the precursor, the lithium salt, and the additive containing the element C1 react completely, forming a single sintered material with rich bulk doping, improving hardness and densification of the cathode material, thereby improving the structure stability of the cathode material. Performing the second sintering treatment at a relatively high temperature can make the first sintered material and the additive containing the element C2 form a second sintered material with further surface doping, which can enhance the particle strength of the cathode material while reducing the surface residual alkali. Performing the third sintering treatment at a lower temperature can make the additive containing the element T coat the particle surface, further improving the particle strength of the cathode material.

According to the present disclosure, 200°C≤T₃≤500°C.

According to the present disclosure, 400°C≤T₂≤900°C.

In the present disclosure, T₃ may be 200°C, 210°C, 220°C, 230°C, 240°C, 250°C, 300°C, 350°C, 400°C, 450°C, 500°C, or in a range defined by any two of aforementioned values.

In the present disclosure, T₂ may be 400°C, 410°C, 420°C, 430°C, 440°C, 450°C, 500°C, 550°C, 600°C, 650°C, 700°C, 750°C, 800°C, 850°C, 900°C, or in a range defined by any two of the aforementioned values.

Further, 250°C≤T₃<T₂<T₁≤980°C, 50°C≤T₁-T₂≤300°C. For example, T₁-T₂ may be 50°C, 55°C, 60°C, 65°C,70°C, 75°C, 80°C, 85°C, 90°C, 95°C, 100°C, 150°C, 200°C, 250°C, 300°C, or in a range defined by any two of the aforementioned values.

Further, 250°C≤T₃≤450°C.

Further, 500°C≤T₂≤800°C.

In the present disclosure, the constant temperature duration t₁ ranges from 6h to 18h.

In the present disclosure, the constant temperature duration t₂ ranges from 6h to 14h.

In the present disclosure, the constant temperature duration t₃ ranges from 6h to 12h.

In the present disclosure, there is no special requirement for devices used for crushing, as long as the crushing can be achieved, for example, one or more of a soymilk machine, a jaw crusher, a roller crusher, a rotary wheel mill, a colloid mill, a mechanical mill, and a jet mill.

In the present disclosure, the oxygen-containing atmosphere is oxygen and/or air.

In the present disclosure, a residual alkali content of the second sintered material IV ranges from 3,000 ppm to 150,000 ppm. For example, the residual alkali content of the second sintered material IV may be 3,000 ppm, 3,500 ppm, 4,000 ppm, 4,500 ppm, 5,000 ppm, 5,500 ppm, 6,000 ppm, 6,500 ppm, 7,000 ppm, 7,500 ppm, 8,000 ppm, 8,500 ppm, 9,000 ppm, 9,500 ppm, 10,000 ppm, 11,000 ppm, 12,000 ppm, 13,000 ppm, 14,000 ppm, 15,000 ppm, or in a range defined by any two of the aforementioned values, and preferably range from 3,000 ppm to 10,000 ppm.

A third aspect of the present disclosure provides a lithium-ion battery. The lithium-ion battery includes the above-mentioned cathode material.

The present disclosure will be described below in detail through examples.

A peak position of a characteristic peak (003) and a lattice volume of the cathode material are measured by XRD. Specific test conditions include: an operating temperature of 21±5°C, a humidity≤65%; a cooling water circulator at a temperature of 23±1°C under a water pressure of 0.36 MPa; a high refrigerant pressure ranging from 0.8 MPa to 1.8 MPa and a low refrigerant pressure ranging from 0.4 MPa to 0.7 MPa; a scanning speed (Scanspeed) of 5°/min; a start angle of 10.0000 and an end angle of 90.0000; Sampling Width of 0.0200; and a rotation speed of an automatic rotating stage of 60°/min.

A specific surface area of the cathode material is measured by a Tri-star 3020 specific surface meter from Micromeritics, USA. Specific test conditions includes: a sample amount of 5.0 g; a device degassing time/temperature of 100°C/120 min (gas purging); adsorbate of N₂, 99.99%; a liquid nitrogen temperature of -196°C; a multi-point BET method: P/P0 0.060, 0.080, 0.120, 0.160, 0.200.

A median particle size of the cathode material is measured by a Malvern Mastersizer 3000 laser particle size analyzer. Specific test conditions includes: a dispersant: 650 ml + 20 ml of 5% sodium pyrophosphate; a particle refractive index of 1.741; particle absorption rate of 1; a solvent refractive index of Water/1.330; a total amount of the particles and dispersant of about 800 mL; test cycling of 1 time; a background test duration of 5 s; a rotation speed of stirrer/pump: 2850 r/min; an analysis mode of General purpose; and a light shielding rate ranging from 14% to 16%.

Residual alkali contents of the cathode material and the sintered material are measured by a Metrohm OMNIS potentiometric titrator. Specific test steps include: taking 5 g of the sample, adding 95 g of water to the sample, stirring the solution for 5 min, performing a vacuum filtration to obtain 80 mL of the solution, and measuring the residual alkali by potentiometric titration with 0.1 mol/L hydrochloric acid.

Electrochemical performance testing of a button battery.

Preparation of the battery: 9.5 g of a positive active material sample, 0.25 g of acetylene black, and 0.25 g of polyvinylidene fluoride (PVDF) were mixed to form a positive slurry. The positive slurry was coated on an aluminum foil and dried, compressed into a shape with a diameter of 12 mm and a thickness of 120 µm under a pressure of 100 MPa, and then dried in a vacuum oven at 120°C for 12 h, to obtain a positive plate.

A Li metal sheet with a diameter of 17 mm and a thickness of 1 mm was used as a negative plate. A polyethylene porous membrane with a thickness of 25 µm was used as a separator. 1.0 mol/L LiPF₆ solution was used as an electrolyte solution. A mixture of equal amounts of ethylene carbonate (EC) and diethyl carbonate (DEC) was used as a solvent.

The positive plate, the separator, the negative plate, and the electrolyte solution were assembled into a 2025-type button battery.

Capacity test: the prepared button battery sample was allowed to stand for 24 h. The battery sample was charged at a current density of 20 mA/g until a cut-off voltage of 4.3 V was reached. The battery sample was charged at a constant voltage of 4.3 V for 30 min. Subsequently, the battery sample was discharged at a current density of 20 mA/g until a cut-off voltage of 3.0 V was reached, and a discharge duration was recorded.

An initial discharge specific capacity of the battery sample=the current density*the discharge duration.

Test at different SOCs: the prepared button battery sample was allowed to stand for 24 h. The battery sample was charged at a current density of 20 mA/g until the cut-off voltage of 4.3 V was reached. The battery sample was charged at the constant voltage of 4.3 V for 30 min. Subsequently, the battery sample was discharged at a current density of 20 mA/g until the cut-off voltage of 3.0 V was reached, and the discharge duration was recorded. Then, the battery sample was charged to 3.73 V and 4.30 V, respectively corresponding to 50% SOC and 100% SOC, at a current density of 20 mA/g for subsequent disassembly.

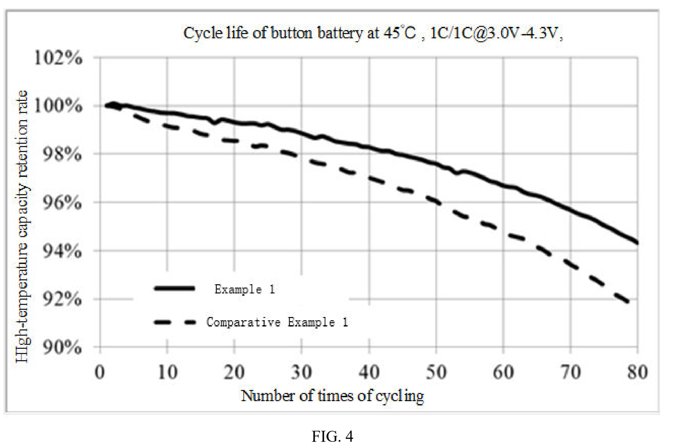

Cycling test: the battery sample was subjected to charge-discharge twice at a current density of 20 mA/g with a cut-off voltage ranging from 3.0 V to 4.3 V to complete the activation. The activated battery sample was subjected to charge-discharge cycling at a temperature of 45°C at a current density of 1 C within the voltage ranging from 3.0 V to 4.3 V for a predetermined number of charge-discharge cycles such as 80 cycles. As described above, a discharge specific capacity of the battery for each charge-discharge cycling was obtained according to the current density and the discharge duration of each cycling. The cycling performance of the battery samples was characterized by a high-temperature capacity retention rate. The cycling performance was shown in FIG. 4.

The high-temperature capacity retention rate*100%=the discharge specific capacity at the specified 80th cycling/the initial discharge specific capacity* 100%.

Battery disassembly: the battery was disassembled in a glove box. The positive plate and negative plate were taken out, cleaned with DMC for 1min, and dried for later testing.

Raw materials used in the Examples and Comparative Examples were all commercially available products.

### Example 1

(1) A precursor(Ni_{0.8}Co_{0.1}Mn_{0.1})(OH)₂, lithium hydroxide, Al₂O₃, and ZrO₂ were physically and uniformly mixed to obtain a mixture I. Amounts of the precursor, lithium hydroxide, Al₂O₃, and ZrO₂ enabled, in the cathode material, n(Li):[n(Ni)+n(Co')+n(Mn)+n(Al)+n(Zr)+n(Co")]=1.05, n(Al):[n(Ni)+n(Co')+n(Mn)+n(Al)+n(Zr)+n(Co")]=0.08, and n(Zr):[n(Ni)+n(Co')+n(Mn)+n(Al)+n(Zr)+n(Co")]=0.003 to be satisfied.
(2) A first sintering treatment was performed on the mixture I in an oxygen atmosphere at a constant temperature of 790°C for a constant temperature duration of 9 h. After the first sintering treatment, the mixture I was directly sieved to obtain a first sintered material II.
(3) The first sintered material II was mixed with Co(OH)₂ to obtain a uniform mixture III. An addition amount of Co(OH)₂ enabled n(Co):[n(Ni)+n(Co')+n(Mn)+n(Al)+n(Zr)+n(Co")]=0.108 to be satisfied.
(4) A second sintering treatment was performed on the mixture III in an oxygen atmosphere at a constant temperature of 700°C for a constant temperature duration of 8 h. After the second sintering treatment, the mixture III was directly sieved to obtain a second sintered material IV.
(5) The second sintered material IV was mixed with boric acid according to a ratio of [n(Ni)+n(Co)+n(Mn)+n(Al)+n(Zr)]:n(B)=1:0.005 to obtain a uniform mixture V.
(6) A third sintering treatment was performed on the mixture V in an air atmosphere at a constant temperature of 350°C for a constant temperature duration of 8 h. After the third sintering treatment, the mixture V was directly sieved to obtain a final cathode material, with a composition of Li_{1.05}(Ni_{0.783}Co'_{0.098}Mn_{0.098}Al_{0.008}Zr_{0.003}Co"_{0.010})B_{0.005}O₂, where Co' came from the precursor, and Co" came from Co(OH)₂. After being simplified, the composition was Li_{1.05}(Ni_{0.783}Co_{0.108}Mn_{0.098}Al_{0.008}Zr_{0.003})B_{0.005}O₂.

### Examples and Comparative Examples

The cathode material was prepared according to the method in Example 1. Specific preparation process parameters are shown in Table 1.

**Table 1**

| | Example 1 | Example 2 | Example 3 |
|---|---|---|---|
| Precursor | (Ni_{0.8}Co_{0.1}Mn_{0.1})(OH)₂ | (Ni_{0.8}Co_{0.1}Mn_{0.1})(OH)₂ | (Ni_{0.6}Co_{0.1}Mn_{0.3})(OH)₂ |
| Lithium source | LiOH | LiOH | Li₂CO₃ |
| Additive types in step (1) | Al₂O₃, ZrO₂ | ZrO₂ | Al₂O₃, SrO₂ |
| Additive types in step (3) | Co(OH)₂ | Co(OH)₂, Al₂O₃ | Co(OH)₂, Al₂O₃ |
| Addition amounts of additives in steps (1) and (3) | n(Li):n(Al):n(Zr):n(Co"):[n(Ni)+ n(Co')+n(Mn)+n(Al)+n(Zr)+n(C o")]=1.05:0.008:0.003:0.010:1 | n(Li):n(Al):n(Zr):n(Co"):[n(Ni)+n( Co')+n(Mn)+n(Al)+n(Zr)+n(Co")] =1.05:0.003: 0.005:0.010:1 | n(Li):n(Al):n(Sr):n(Co"):[n(Ni)+n(C o')+n(Mn)+n(Al)+n(Sr)+n(Co")]=1. 07:0.013:0.001: 0.010:1 |
| Types and addition amounts of additives in step (5) | H₃BO₃ | H₃BO₃, W₂O₃ | W₂O₃ |
| | n(B):[n(Ni)+n(Co')+n(Mn)+n(Al )+n(Zr)+n(Co")]= 0.005:1 | n(B):n(W):[n(Ni)+n(Co')+ n(Mn)+n(Al)+n(Zr)+n(Co")]=0.00 5:0.002:1 | n(W):[n(Ni)+n(Co')+n(Mn)+ n(Al)+n(Sr)+n(Co")]=0.001:1 |
| T₁/°C | 790 | 780 | 960 |
| t₁/h | 9 | 9 | 9.6 |
| T₂/°C | 700 | 710 | 750 |
| t₂/h | 8 | 8 | 8 |
| T₃/°C | 350 | 450 | 450 |
| t₃/h | 8 | 8 | 8 |
| T₁- T₂/°C | 90 | 70 | 210 |
| Chemical formula of the cathode material | Li_{1.05}(Ni_{0.783}Co'_{0.098}Mn_{0.098} Al_{0.008}Zr_{0.003}Co"_{0.010})B_{0.005} O₂ | Li_{1.05}(Ni_{0.786}Co'_{0.098}Mn_{0.098} Al_{0.003}Zr_{0.005}Co"_{0.010})B_{0.005} W_{0.002}O₂ | Li_{1.07}(Ni_{0.586}Co'_{0.097}Mn_{0.293} Al_{0.013}Sr_{0.001}Co"_{0.010})W_{0.001}O₂ |
| Simplified chemical formula of the cathode material | Li_{1.05}(Ni_{0.783}Co_{0.108}Mn_{0.098} Al_{0.008}Zr_{0.003})B_{0.005}O₂ | Li_{1.05}(Ni_{0.786}Co_{0.108}Mn_{0.098} Al_{0.003}Zr_{0.005})B_{0.005}W_{0.002}O₂ | Li_{1.07}(Ni_{0.586}Co_{0.107}Mn_{0.293} Al_{0.013}Sr_{0.001})W_{0.001}O₂ |

**Table 1 (Continued)**

| | Example 4 | Example 5 | Example 6 |
|---|---|---|---|
| Precursor | (Ni_{0.9}Co_{0.05}Mn_{0.05})(OH)₂ | (Ni_{0.9}Co_{0.05}Mn_{0.05})(OH)₂ | (Ni_{0.9}Co_{0.05}Mn_{0.05})(OH)₂ |
| Lithium source | LiOH | LiOH | LiOH |
| Additive types in step (1) | Al₂O₃, Y₂O₃ | Al₂O₃, MgO | MgO, Nb₂O₅ |
| Additive types in step (3) | Co(OH)₂, Al₂O₃ | Co(OH)₂, Al₂O₃ | MnO₂, MgO |
| Addition amounts of additives in steps (1) and (3) | n(Li):n(Al):n(Y):n(Co"): [n(Ni)+n(Co')+n(Mn)+n(Al)+n(Y) +n(Co")]= 1.03:0.011:0.001:0.010:1 | n(Li):n(Al):n(Mg):n(Co"): [n(Ni)+n(Co')+n(Mn)+n(Al)+n(Mg )+n(Co")]= 1.03:0.011:0.001:0.010:1 | n(Li):n(Al):n(Nb):n(Mn"): [n(Ni)+n(Co)+n(Mn')+n(Mg)+n(Nb) +n(Mn")]= 1.02:0.011:0.001:0.0 10:1 |
| Types and addition amounts of additives in step (5) | H₃BO₃ | H₃BO₃ | H₃BO₃ |
| | n(B):[n(Ni)+n(Co')+n(Mn)+n(Al)+ n(Y)+n(Co")]= 0.005:1 | n(B):[n(Ni)+n(Co')+n(Mn)+n(Al)+ n(Mg)+n(Co")]= 0.005:1 | n(B):[n(Ni)+n(Co)+n(Mn')+n(Mg)+ n(Nb)+n(Mn")]= 0.005:1 |
| T₁/°C | 760 | 760 | 780 |
| t₁/h | 9 | 9 | 9 |
| T₂/°C | 700 | 700 | 700 |
| t₂/h | 8 | 8 | 8 |
| T₃/°C | 340 | 340 | 340 |
| t₃/h | 8 | 8 | 8 |
| T₁- T₂/°C | 60 | 60 | 80 |
| Chemical formula of the cathode material | Li_{1.03}(Ni_{0.880}Co'_{0.049}Mn_{0.049} Al_{0.011}Y_{0.001}Co"_{0.010})B_{0.005} O₂ | Li_{1.03}(Ni_{0.880}Co_{0.049}Mn_{0.049} Al_{0.011}Mg_{0.001}Co"_{0.010})B_{0.005}O₂ | Li_{1.02}(Ni_{0.880}Co_{0.049}Mn'_{0.049} Mg_{0.011}Nb_{0.001}Mn"_{0.010})B_{0.005}O₂ |
| Simplified chemical formula of the cathode material | Li_{1.03}(Ni_{0.880}Co_{0.059}Mn_{0.049} Al_{0.011}Y_{0.001})B_{0.005}O₂ | Li_{1.03}(Ni_{0.880}Co_{0.059}Mn_{0.049} Al_{0.011}Mg_{0.001})B_{0.005}O₂ | Li_{1.02}(Ni_{0.880}Co_{0.049}Mn_{0.059} Mg_{0.011}Nb_{0.001})B_{0.005}O₂ |

**Table 1 (Continued)**

| | Example 7 | Example 8 | Comparative Example 1 |
|---|---|---|---|
| Precursor | (Ni_{0.9}Co_{0.05}Mn_{0.05})(OH)₂ | (Ni_{0.9}Co_{0.05}Mn_{0.05})(OH)₂ | (Ni_{0.8}Co_{0.1}Mn_{0.1})(OH)₂ |
| Lithium source | LiOH | LiOH | LiOH |
| Additive types in step (1) | Al₂O₃, Y₂O₃ | Al₂O₃, Y₂O₃ | Al₂O₃, ZrO₂ |
| Additive types in step (3) | Co(OH)₂, Al₂O₃ | Co(OH)₂, Al₂O₃ | Co(OH)₂ |
| Addition amounts of additives in steps (1) and (3) | n(Li):n(Al):n(Y):n(Co"):[ n(Ni)+n(Co')+n(Mn)+n(Al)+n(Y)+n(C o")]= 1.02:0.004:0.001:0.005:1 | n(Li):n(Al):n(Y):n(Co"):[ n(Ni)+n(Co')+n(Mn)+n(Al)+n(Y)+ n(Co")]= 1.04:0.008:0.001:0.008:1 | n(Li):n(Al):n(Zr):n(Co"):[ n(Ni)+n(Co')+n(Mn)+n(Al)+n(Zr) +n(Co")]= 1.01:0.008:0.003:0.010:1 |
| Types and addition amounts of additives in step (5) | H₃BO₃ | H₃BO₃ | H₃BO₃ |
| | n(B):[n(Ni)+n(Co')+n(Mn)+ n(Al)+n(Y)+n(Co")]=0.005:1 | n(B):[n(Ni)+n(Co')+n(Mn)+n(Al)+ n(Y)+n(Co")]= 0.008:1 | n(B):[n(Ni)+n(Co')+n(Mn)+n(Al) +n(Zr)+n(Co")]= 0.005:1 |
| T₁/°C | 680 | 690 | 790 |
| t₁/h | 7 | 9 | 9 |
| T₂/°C | 600 | 800 | 700 |
| t₂/h | 8 | 8 | 8 |
| T₃/°C | 520 | 400 | 350 |
| t₃/h | 6 | 8 | 8 |
| T₁- T₂/°C | 80 | -110 | 90 |
| Chemical formula of the cathode material | Li_{1.02}(Ni_{0.891}Co'_{0.049}Mn_{0.050} Al_{0.004}Y_{0.001}Co"_{0.005})B_{0.005}O₂ | Li_{1.04}(Ni_{0.885}Co'_{0.049}Mn_{0.049} Al_{0.008}Y_{0.001}Co"_{0.008})B_{0.008}O₂ | Li_{1.01}(Ni_{0.783}Co'_{0.098}Mn_{0.098}Al_{0.008}Zr _{0.003}Co"_{0.010})B_{0.005}O₂ |
| Simplified chemical formula of the cathode material | Li_{1.02}(Ni_{0.891}Co_{0.054}Mn_{0.050} Al_{0.004}Y_{0.001})B_{0.005}O₂ | Li_{1.04}(Ni_{0.885}C_{0.057}Mn_{0.049} Al_{0.008}Y_{0.001})B_{0.008}O₂ | Li_{1.01}(Ni_{0.783}Co_{0.108}Mn_{0.098} Al_{0.008}Zr_{0.003})B_{0.005}O₂ |

**Table 1 (Continued)**

| | Comparative Example 2 | Comparative Example 3 | Comparative Example 4 |
|---|---|---|---|
| Precursor | (Ni_{0.8}Co_{0.1}Mn_{0.1})(OH)₂ | (Ni_{0.8}Co_{0.1}Mn_{0.1})(OH)₂ | (Ni_{0.8}Co_{0.01}Mn_{0.1})(OH)₂ |
| Lithium source | LiOH | LiOH | LiOH |
| Additive types in step (1) | Al₂O₃, ZrO₂ | Al₂O₃, ZrO₂ | / |
| Additive types in step (3) | Co(OH)₂ | / | / |
| Addition amounts of additives in steps (1) and (3) | n(Li):n(Al):n(Zr):n(Co"):[n(Ni)+ n(Co')+n(Mn)+n(Al)+n(Zr)+ n(Co")]= 1.13:0.008:0.003:0.010:1 | n(Li):n(Al):n(Zr):[n(Ni)+n(Co')+ n(Mn)+n(Al)+ n(Zr)]= 1.06:0.008:0.003:1 | n(Li):[n(Ni)+n(Co')+ n(Mn)')]=1.05:1 |
| Types and addition amounts of additives in step (5) | H₃BO₃ | H₃BO₃ | / |
| | n(B):[n(Ni)+n(Co')+n(Mn)+n(Al)+n(Zr)+n( Co")]=0.005:1 | n(B):[n(Ni)+n(Co')+n(Mn)+n(Al )+n(Zr)]= 0.005:1 | / |
| T₁/°C | 790 | 770 | 790 |
| t₁/h | 9 | 9 | 9 |
| T₂/°C | 700 | / | 700 |
| t₂/h | 8 | / | 8 |
| T₃/°C | 350 | 350 | 350 |
| t₃/h | 8 | 8 | 8 |
| T₁- T₂/°C | 90 | / | 90 |
| Chemical formula of the cathode material | Li_{1.13}(Ni_{0.783}Co'_{0.098}Mn_{0.098}Al_{0.008} Zr_{0.003}Co"_{0.010})B_{0.005}O₂ | Li_{1.06}(Ni_{0.791}Co'_{0.099}Mn_{0.099}Al_{0.008} Zr_{0.003})B_{0.005}O₂ | Li_{1.05}(Ni_{0.8}Co'_{0.1}Mn_{0.01})O₂ |
| Simplified chemical formula of the cathode material | Li_{1.13}(Ni_{0.783}Co_{0.108}Mn_{0.098}Al_{0.008} Zr_{0.003})B_{0.005}O₂ | Li_{1.06}(Ni_{0.791}Co_{0.099}Mn_{0.099}Al_{0.008}Z r_{0.003})B_{0.005}O₂ | Li_{1.05}(Ni_{0.8}Co_{0.1}Mn_{0.01}) O₂ |

Structural parameters of cathode materials prepared in Examples and Comparative Examples and performance indexes of lithium-ion batteries assembled by the cathode materials of the Examples and Comparative Examples are shown in Table 2.

| NO. | Residual lithium in the second sintered material (ppm) | Residual lithium in finished product (ppm) | D50 (µm) | ΔP(°) | ΔSSA (%) | ΔV50 (%) | ΔV100 (%) |
|---|---|---|---|---|---|---|---|
| Example 1 | 8413 | 5980 | 12.5 | 0.06 | 38 % | 2.62% | 7.61% |
| Example 2 | 8890 | 6300 | 4.0 | 0.04 | 15% | 1.83% | 6.23% |
| Example 3 | 2496 | 2690 | 3.7 | 0.04 | 20% | 1.31% | 5.90% |
| Example 4 | 9445 | 6647 | 13.1 | 0.09 | 45% | 3.44% | 8.43% |
| Example 5 | 8945 | 5647 | 13.1 | 0.07 | 48% | 4.87% | 9.16% |
| Example 6 | 12364 | 7658 | 13.1 | 0.13 | 64% | 10.31% | 16.89% |
| Example 7 | 9146 | 5434 | 12.5 | 0.16 | 135% | 14.10% | 21.31% |
| Example 8 | 11780 | 6760 | 13.1 | 0.13 | 75% | 7.35% | 13.47% |
| Comparative Example 1 | 7530 | 5234 | 12.5 | 0.23 | 88% | 10.22% | 16.43% |
| Comparative Example 2 | 16110 | 9100 | 12.5 | 0.21 | 31% | 3.01% | 7.32% |
| Comparative Example 3 | 8613 | 6930 | 12.5 | 0.36 | 119% | 14.20% | 19.60% |
| Comparative Example 4 | 12113 | 7980 | 12.5 | 0.27 | 96% | 12.71% | 17.43% |

**Table 2 (Continued)**

| NO. | 0.1C capacity/(mAh/g) | Retention rate of 80 cycles/(%) |
|---|---|---|
| Example 1 | 216.1 | 95.30% |
| Example 2 | 215.5 | 94.10% |
| Example 3 | 196.5 | 96.30% |
| Example 4 | 224.1 | 93.90% |
| Example 5 | 223.4 | 93.50% |
| Example 6 | 225.3 | 92.70% |
| Example 7 | 226.2 | 92.60% |
| Example 8 | 225.4 | 93.10% |
| Comparative Example 1 | 210.9 | 89.50% |
| Comparative Example 2 | 200.9 | 92.50% |
| Comparative Example 3 | 211.4 | 86.90% |
| Comparative Example 4 | 212.5 | 88.40% |

It can be seen from Table 2 that the prepared cathode material according to the present disclosure exhibits characteristics such as a high particle strength, a low lattice volume variation rate, and a small peak shift before and after the cycling. The prepared lithium-ion batteries can ensure a high capacity retention rate while having a high discharge capacity.

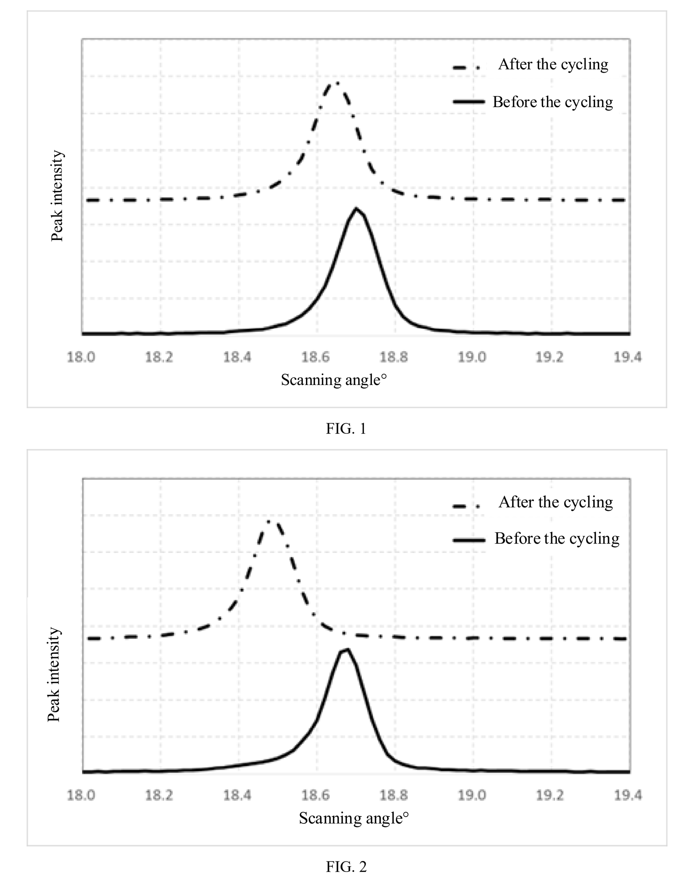

FIG. 1 shows a diagram of the position of the characteristic peak 003, measured by XRD, before and after 80 cycles of the cathode material in Example 1. FIG. 2 shows a diagram of the position of the characteristic peak 003, measured by XRD, before and after 80 cycles of the cathode material in Comparative Example 1. It can be seen from FIG. 1 and FIG. 2 that the shift of the position of the characteristic peak 003 in Example 1 is smaller than that in Comparative Example 1.

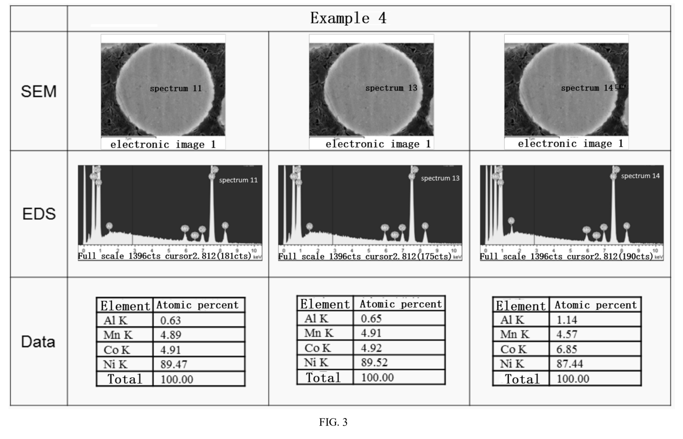

FIG. 3 shows an EDS analysis diagram of a cross-section of the cathode material in Example 4. It can be seen from FIG. 3 that the element Al is uniform inside the material. After the second sintering treatment, the contents of Al and Co in subsurface increase, indicating that the elements have entered the subsurface of the material.

FIG. 4 shows a comparison of cycling performance of lithium-ion battery respectively obtained by assembling the cathode materials in Example 1 and Comparative Example 1. It can be seen from FIG. 4 that the cycling performance of the lithium-ion battery in Example 1 is significantly better than that in Comparative Example 1.

The preferred embodiments of the present disclosure are described in detail above. However, the present disclosure is not limited thereto. Within the scope of the technical concept of the present disclosure, various simple variants can be made to the technical solutions of the present disclosure, which includes combining various technical features in any other suitable way. These simple variants and combinations should also be regarded as the content disclosed in the present disclosure and each belong to the scope of the present disclosure.

## Claims

1. A cathode material, having a composition represented by Formula I:
Li₁₊ₐ(NiₓCo_{y}Mn_{z}G_{b})T_{c}O₂ Formula I,
where: 0.02≤a≤0.1, 0.6≤x≤1, 0<y≤0.5, 0<z≤0.5, 0<b≤0.02, 0<c≤0.02;
G is selected from at least one of Al, Y, Zr, Ti, Ca, V, Nb, Ta, Co, W, Er, La, Sb, Mg, Sr, Sn, Mn, Mo, Ce, F, B, and P; and
T is selected from at least one of Al, Sr, Si, Nb, Co, W, Ti, Zr, Ce, Mn, F, B, and P,
wherein a characteristic peak (003), measured by XRD, prior to a charge-discharge cycling and a characteristic peak (003), measured by XRD, subsequent to a charge-discharge cycling for 80 cycles at 45°C satisfy: $0 ° \leq ΔP = {P}_{pre} - {P}_{post} \leq 0.2 °$ , where:
Pₚᵣₑ is a peak position of the characteristic peak (003) prior to the charge-discharge cycling; and
Pₚₒₛₜ is a peak position of the characteristic peak (003) subsequent to the charge-discharge cycling for 80 cycles.

2. The cathode material according to claim 1, wherein:
0.03≤a≤0.07, 0.6≤x≤1, 0<y≤0.5, 0<z≤0.5, 0.005≤b≤0.015, 0.002≤c≤0.015; and/or
G is selected from at least one of Al, Ti, Co, Sr, Ce, F, Y, Zr, W, and La, and T is selected from at least one of B, Al, Si, W, and F; and/or $0 ° \leq ΔP \leq 0.1 ° .$

3. The cathode material according to claim 1 or 2, wherein lattice volumes V, measured by XRD, of the cathode material at 0% SOC, 50% SOC, and 100% SOC satisfy: $0 % \leq {ΔV}_{50 %} = \left({V}_{50}-{V}_{0}\right) / {V}_{0} \leq 10 % ,$ and/or $0 % \leq {ΔV}_{100 %} = \left({V}_{100}-{V}_{0}\right) / {V}_{0} \leq 15 % ,$ where:
V₀ is the lattice volume of the cathode material at 0% SOC;
V₅₀ is the lattice volume of the cathode material at 50% SOC; and
V₁₀₀ is the lattice volume of the cathode material at 100% SOC.

4. The cathode material according to any one of claims 1 to 3, wherein a specific surface area, SSA, of the cathode material prior to compression and an SSA of the cathode material subsequent to compression under a pressure of 4.5 tons satisfy: 0%≤△SSA%=(SSA₄-SSA₀)/SSA₀≤80%, and preferably, 0%≤△SSA%≤50%, where:
SSA₀ is the specific surface area of the cathode material prior to compression; and
SSA₄ is the specific surface area of the cathode material subsequent to compression under the pressure of 4.5 tons.

5. The cathode material according to any one of claims 1 to 4, wherein:
the cathode material has a median particle size ranging from 2 µm to 20 µm, and preferably, from 3 µm to 18 µm; and/or
the cathode material has a residual alkali content ranging from 0 ppm to 10,000 ppm, and preferably from 1,000 ppm to 8,000 ppm.

6. A preparation method of the cathode material according to any one of claims 1 to 5, the preparation method comprising:
(1) physically mixing a precursor, a lithium source, and optionally an additive containing element C1, to obtain a uniform mixture I;
(2) performing a first sintering treatment on the mixture I in an oxygen-containing atmosphere at a constant temperature T₁ for a constant temperature duration t₁, and crushing and sieving the sintered mixture I or directly sieving the sintered mixture I, to obtain a first sintered material II;
(3) mixing the first sintered material II and optionally an additive containing element C2, to obtain a uniform mixture III;
(4) performing a second sintering treatment on the mixture III in an oxygen-containing atmosphere at a constant temperature T₂ for a constant temperature duration t₂, and crushing and sieving the sintered mixture III or directly sieving the sintered mixture III, to obtain a second sintered material IV;
(5) mixing the second sintered material IV and an additive containing element T, to obtain a uniform mixture V; and
(6) performing a third sintering treatment on the mixture V in an oxygen-containing atmosphere at a constant temperature T₃ for a constant temperature duration t₃, and crushing and sieving the sintered mixture V or directly sieving the sintered mixture V, to obtain the cathode material,
wherein the precursor is selected from nickel cobalt manganese oxide and/or nickel cobalt manganese hydroxide;
wherein amounts of the lithium source, the precursor, the additive containing element C1, and the additive containing element C2 enable n(Li):[n(Ni)+n(Co)+n(Mn)+n(G)]=1.02 to 1.10:1 to be satisfied; and
wherein at least one of the additive containing element C1 and the additive containing element C2 is added.

7. The preparation method according to claim 6, wherein:
the amounts of the lithium source, the precursor, the additive containing element C1, and the additive containing element C2 enable n(Li):[n(Ni)+n(Co)+n(Mn)+n(G)]=1.03 to 1.07:1 to be satisfied;
preferably, the amounts of the precursor, the additive containing element C1, and the additive containing element C2 enable, in the cathode material, 0<n(G):[n(Ni)+n(Co)+n(Mn)+n(G)]≤0.02 to be satisfied, and more preferably, 0.005≤n(G):[n(Ni)+n(Co)+n(Mn)+n(G)]≤0.015 to be satisfied; and
preferably, amounts of the second sintered material and the additive containing element T enable, in the cathode material, 0<n(T):[n(Ni)+n(Co)+n(Mn)+n(G)]≤0.02 to be satisfied, and more preferably, 0.002≤n(T):[n(Ni)+n(Co)+n(Mn)+n(G)]≤0.015 to be satisfied.

8. The preparation method according to claim 6 or 7, wherein:
the element C1 and the element C2 are each independently selected from at least one of Al, Y, Zr, Ti, Ca, V, Nb, Ta, Co, W, Er, La, Sb, Mg, Sr, Sn, Mn, Mo, Ce, F, B, and P; and/or
the element T is selected from at least one of Al, Sr, Si, Nb, Co, W, Ti, Zr, Ce, Mn, F, B, and P, and preferably, at least one of B, Al, Si, W, and F;
preferably, the element C1 is selected from at least one of Al, Y, Zr, W, La, Sr, and Ce; and preferably, the element C2 is selected from at least one of Al, Ti, Co, Sr, Ce, and F.

9. The preparation method according to any one of claims 6 to 8, wherein the constant temperature T₁, the constant temperature T₂, and the constant temperature T₃ satisfy:
200°C≤T₃<T₂<T₁≤1,000°C;
preferably, 200°C<T₃≤500°C; and
preferably, 400°C≤T₂≤900°C.

10. A lithium-ion battery, comprising the cathode material according to any one of claims 1 to 5.
